# FASCICULE DE BREVET EUROPEEN

(11) **EP 3 884 173 B1**
(45) Date de publication et mention de la délivrance du brevet: **07.06.2023**
(21) Numéro de dépôt: 19820820.9
(22) Date de dépôt: 19.11.2019
(51) Int. Cl.: F16B 5/12, E06B 7/23

(54) **PROFILE SOUPLE**
FLEXIBLER PROFILABSCHNITT
FLEXIBLE PROFILE

(30) Priorité: 20.11.2018 FR 1871633
(43) Date de publication de la demande: 29.09.2021
(73) Titulaire: Prodex, 28630 Gellainville (FR)
(72) Inventeur: MERAND, Cyril, 45000 Orléans (FR); VILLEDIEU, Sylvain, 28600 Luisant (FR)
(74) Mandataire: Boüan du Chef du Bos, Louis-Paterne
(86) Numéro de dépôt international: PCT/FR2019/000187
(87) Numéro de publication internationale: WO 2020/104733

(56) Documents cités:
- JP-A- H06 185 129
- US-A- 3 148 419
- US-A- 5 360 251
- US-A1- 2014 311 064
- US-A1- 2015 274 217

## Description

### Domaine de l'invention

La présente invention concerne les profilés souples, constitués au moins partiellement par des matériaux déformables élastiquement.

### Art antérieur

Il est connu de fabriquer, le plus souvent par extrusion, des profilés comprenant un ou plusieurs matériaux déformables élastiquement. De tels profilés peuvent être, classiquement, constitués au moins partiellement d'élastomère ou de caoutchouc. Ils peuvent classiquement avoir une fonction d'étanchéité, une fonction de protection, une fonction esthétique ou autre.

Certains types de profilés souples sont destinés à être mis en place dans une rainure traversant une paroi. Il est notamment bien connu que des profilés souples soient mis en place dans des profilés métalliques, aluminium ou PVC (Polychlorure de vinyle), ayant un profil « en oméga » dont une des faces forme une paroi métallique traversée par une rainure. On connaît ainsi, par exemple, des profilés souples couramment appelés « joints cache-rainure » dont la principale fonction est d'obturer des rainures de profilés en oméga apparaissant dans les montants de portes et fenêtres. De telles rainures, qui servent usuellement à fixer les gâches et les pommelles, peuvent en effet être obturées pour des raisons esthétiques.

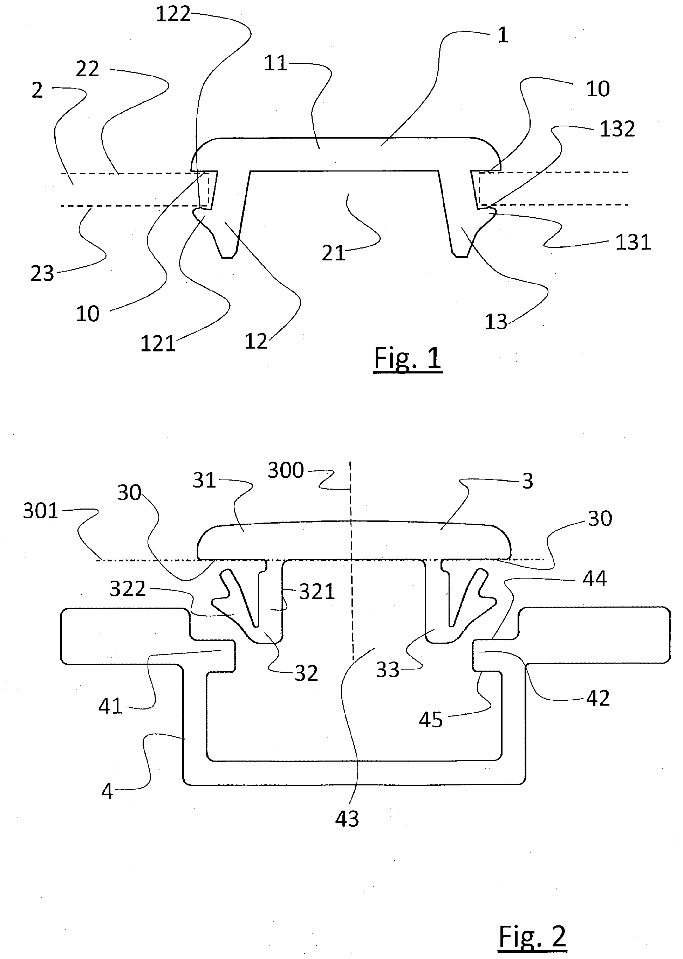

La figure 1 représente un exemple d'un tel profilé souple 1 formant un joint cache-rainure monté dans une rainure 21 traversant une paroi 2 (représentée en pointillés). Un tel profilé 1 présente une surface d'appui 10, qui est destinée à venir en appui contre la surface supérieure 22 de la paroi 2, de part et d'autre de la rainure 21. Par convention, on appelle par la suite « portion supérieure 11 » la partie du profilé 1 située au-dessus de cette surface d'appui 10 et « portion inférieure » la partie du profilé 1 située en-dessous de cette surface d'appui 10.

Dans la solution de l'art antérieur représentée par la figure 1, la portion supérieure 11 n'a qu'un objectif d'obturation. Elle se présente comme une plaque plate dont la surface supérieure est sensiblement parallèle à la surface d'appui 10. La portion inférieure est constituée par deux pattes 12 et 13 s'étendant depuis la portion supérieure 11, dans une direction sensiblement perpendiculaire à la surface d'appui 10 et portant chacune un crochet d'appui, respectivement 121 et 131, dépassant des faces latérales opposées des pattes 12 et 13. Chacun de ces crochets d'appui 121 et 131 présente une surface, respectivement 122 et 132, faisant face à la surface d'appui 10, et destinée à entrer en contact avec la surface inférieure 23 de la paroi 2. Les faces latérales opposées des pattes 12 et 13, entre les crochets 121 et 131 et la surface d'appui 10, peuvent entrer en contact avec les bords de la paroi 2, de façon à centrer le profilé 1 dans la rainure 21.

### Inconvénients de l'art antérieur

De tels profilés souples peuvent être mis en place facilement et obturent efficacement les rainures. Cependant, un profilé de ce type n'est adapté qu'à un type de rainure particulier, défini par une épaisseur de paroi et une largeur de rainures données. L'utilisation d'un tel profilé dans une rainure présentant des dimensions différentes de celles pour lesquelles le profilé est conçu peut être préjudiciable, même quand les différences de dimensions sont faibles, par exemple de l'ordre de quelques dixièmes de millimètres.

Ainsi, si la largeur de la rainure 21 est trop faible, les bords de la rainure peuvent appuyer sur les pattes 12 et 13 en les rapprochant l'une de l'autre, ce qui peut bomber la portion supérieure 11 du profilé 1, le rendant inesthétique. Si au contraire la rainure 21 est trop large, les crochets 121 et 131 peuvent ne plus être bloqués par la surface inférieure 23 de la paroi 2. Le profilé 1 risque alors de sortir de la rainure 21. De même, des variations de l'épaisseur de la paroi 2, par rapport à l'épaisseur prévue, peuvent entraîner un mauvais positionnement du profilé 1 et parfois son retrait de la rainure 21.

Les profilés métalliques, aluminium ou PVC (Polychlorure de vinyle) présentant des rainures dans lesquelles sont montés des profilés souples formant joints cache-rainure, par exemple les profilés aluminium utilisés pour former les entourages de portes ou de fenêtres, sont couramment fabriqués avec des tolérances dimensionnelles relativement importantes. Il est donc courant que ces variations de dimension entraînent un mauvais positionnement des profilés souples.

On connaît, du document JP H06 185129 A, un joint comportant une patte de fixation comportant un premier segment unique qui porte, à distance de la portion supérieure, deux seconds segments s'étendant en direction de la portion supérieure, de part et d'autre du premier segment. Une telle géométrie ne présente qu'une capacité d'adaptation limitée à des rainures de largeur variable, le premier segment ne pouvant pas se déformer lors de l'introduction du joint dans la rainure. Pour cette raison, ce document propose qu'une partie du joint soit expansif, pour s'adapter correctement à la rainure. Une telle solution est cependant onéreuse et compliquée à mettre en oeuvre.

Le document US 2014/0311064 A montre un autre joint selon l'art antérieur.

### Objectifs de l'invention

La présente invention a pour objectif de pallier ces inconvénients de l'art antérieur.

En particulier, un objectif de l'invention est de fournir un profilé souple pouvant être mis en place dans une rainure traversant une paroi et pouvant s'adapter, mieux que les profilés souples de l'art antérieur, à des variations des dimensions de la rainure.

Un autre objectif, selon au moins certains des modes de réalisation, est de fournir un tel profilé souple dont la fabrication ne nécessite pas de surcoût sensible par rapport aux profilés souples de l'art antérieur.

Encore un autre objectif, selon au moins certains des modes de réalisation, est de fournir un tel profilé souple qui puisse être mis en place facilement, sans nécessiter d'effort excessif.

Un autre objectif, selon au moins certains des modes de réalisation, est de fournir un tel profilé souple qui procure, à l'utilisateur installant le profilé souple, une indication claire de son installation correcte.

Encore un autre objectif, selon au moins certains des modes de réalisation, est de fournir un tel profilé souple qui, une fois installé, est maintenu plus efficacement que les profilés souples de l'art antérieur dans la rainure dans laquelle il est monté.

### Exposé de l'invention

Ces objectifs, ainsi que d'autres qui apparaîtront plus clairement par la suite, sont atteints à l'aide d'un profilé souple comportant :
- une portion supérieure présentant une surface d'appui définissant un plan d'appui, la portion supérieure s'étendant d'un premier côté du plan d'appui, et
- une portion inférieure s'étendant du second côté du plan d'appui et comportant deux pattes de fixation, chacune de ces pattes de fixation comportant un premier segment s'étendant à partir de la portion supérieure, dans une direction s'éloignant du plan d'appui,
dans lequel chacune de ces pattes de fixation comporte un second segment lié au premier segment par l'intermédiaire d'une zone de charnière située à distance du plan d'appui et s'étendant, depuis cette zone de charnière, dans une direction se rapprochant du plan d'appui, du côté du premier segment opposé à l'autre patte de fixation, et dans lequel la surface de chacun des seconds segments qui est opposée au premier segment qui le porte présente au moins une plage concave conformée pour entrer en contact, simultanément, avec deux faces formant une arête à angle droit.

Ainsi, la plage concave, qui est prévue pour prendre appui contre les bords de la rainure dans laquelle sera inséré le profilé souple, peut prendre une grande variété de positions. Elle permet de fixer le profilé souple dans des rainures dont les caractéristiques dimensionnelles, et notamment la largeur, présentent une variété relativement importante.

Par ailleurs, comme chacun des seconds segments est portée par un premier segment indépendant, chaque patte de fixation peut se déformer de façon importante lors de l'introduction du profilé souple dans une rainure. Ainsi, la patte de fixation peut se déformer d'une part par une déformation du premier segment, et d'autre part par le déplacement du second segment par rapport au premier segment. Ce double déplacement permet une amplitude de déformation importante, permettant ainsi de s'adapter à des largeurs de rainure ayant une grande variabilité.

Avantageusement, au moins une des pattes de fixation est conformée pour permettre au second segment de pivoter autour de la zone de charnière, d'un angle de débattement compris entre 5° et 90°, et de préférence compris entre 20° et 45°, entre la position du second segment, quand le profilé n'est pas contraint mécaniquement, et la position du second segment, quand il est en contact avec le premier segment qui le porte.

Avantageusement, sur au moins l'une des pattes de fixation, la surface du second segment qui est opposée au premier segment présente, entre la zone de charnière et la plage concave, au moins une plage formant, quand le profilé n'est pas contraint mécaniquement, une inclinaison comprise entre 20° et 70° avec le plan d'appui.

Une telle inclinaison permet, lorsque le profilé souple est inséré dans une rainure, que les bords de cette rainure déforment facilement les seconds segments des pattes.

Avantageusement, sur au moins l'une des pattes de fixation, le premier segment est lié à la portion supérieure par l'intermédiaire d'une zone de charnière.

Une telle zone de charnière permet aux pattes de se déformer facilement pour s'adapter aux dimensions de la rainure. En effet, lors de l'introduction du profilé souple dans la rainure, la patte de fixation peut se déformer d'une part par le déplacement du premier segment par rapport à la portion supérieure, qui est facilité par la zone de charnière, et d'autre part par le déplacement du second segment par rapport au premier segment. Ce double déplacement permet que l'amplitude de la déformation soit très importante, permettant ainsi de s'adapter à des largeurs de rainure ayant une très grande variabilité, sans que l'introduction des pattes de fixation dans la rainure ne nécessite un effort trop important de la part de l'opérateur.

Par ailleurs, le fait que chaque patte de fixation comprenne deux zones de charnière permet de répartir la déformation de la patte lors de l'introduction du profilé dans la rainure. Chacune des zones charnière peut alors avoir une raideur plus forte sans que cela nuise à la souplesse de l'ensemble. La robustesse du profilé en est renforcée.

Selon un mode de réalisation particulier, sur au moins l'une des pattes de fixation, la surface du second segment qui est opposée au premier segment comporte, successivement, au moins deux plages concaves conformées chacune pour entrer en contact, simultanément, avec deux faces formant une arête à angle droit.

### Liste des figures

L'invention sera mieux comprise à la lecture de la description suivante de modes de réalisation préférentiels, donnée à titre de simple exemple figuratif et non limitatif, et accompagnée des figures parmi lesquelles :
- [Fig. 1] la figure 1, qui est commentée ci-avant, est une vue de section représentant le profil d'un profilé souple de type « joint cache-rainure » connu de l'art antérieur, monté dans une rainure ;
- [Fig. 2] la figure 2 est une vue de section représentant le profil d'un profilé souple selon un mode de réalisation de l'invention, placé face à une rainure ;
- [Fig. 3] la figure 3 est une vue de détail d'une partie du profil du profilé souple de la figure 2 ;
- [Fig. 4] la figure 4 est une vue de section montrant le profil du profilé souple de la figure 2 monté dans la rainure de la figure 2 ;
- [Fig. 5] la figure 5 est une vue de section représentant le profil d'un profilé souple selon un autre mode de réalisation de l'invention.

### Description détaillée de modes de réalisation de l'invention

### Le profilé souple

La figure 2 représente le profil d'un profilé souple 3 selon un mode de réalisation de l'invention. Ce profilé souple est représenté, sur cette figure, en position de repos, c'est-à-dire dans la position qu'il adopte quand il ne subit aucune contrainte mécanique. Du fait de la souplesse du matériau qui le compose, il peut cependant se déformer élastiquement, à partir de cette position de repos.

Ce profilé souple 3 est du type connu sous le nom de « cache-rainure ». Il présente une surface d'appui 30 qui est destinée à venir en appui contre la surface supérieure d'une paroi, de part et d'autre d'une rainure. Cette surface d'appui 30 définit un plan d'appui 301, qui sépare le profilé 3 en deux portions : une portion supérieure 31 et une portion inférieure.

La portion supérieure 31, située au-dessus de ce plan d'appui 301, est de forme sensiblement plate pour obturer la rainure. Elle a en effet, dans un profilé de type « joint cache-rainure », une fonction d'obturation. Il est cependant possible, dans d'autres modes de réalisation de l'invention, que cette portion supérieure 31 présente une forme différente afin d'exercer d'autres fonctions. En plus de sa fonction d'obturation, cette portion supérieure 31 participe au maintien du profilé 3 dans la rainure, par sa surface d'appui 30 qui est destinée à entrer en contact avec la surface supérieure de la paroi dans laquelle est définie la rainure. La surface d'appui 30 est plane dans le mode de réalisation représenté, mais peut présenter toute autre forme permettant l'appui de la portion supérieure 31 sur une surface.

La portion inférieure du profilé 3, située en-dessous du plan d'appui 301, est constituée par deux pattes 32 et 33 permettant au profilé 3 d'être fixé dans une rainure. Dans le mode de réalisation représenté, les pattes 32 et 33 sont symétriques, par rapport à un plan médian 300 perpendiculaire à la surface d'appui 30. En conséquence, seule la patte 32 est décrite ci-dessous, la patte 33 présentant les mêmes caractéristiques.

### La patte 32

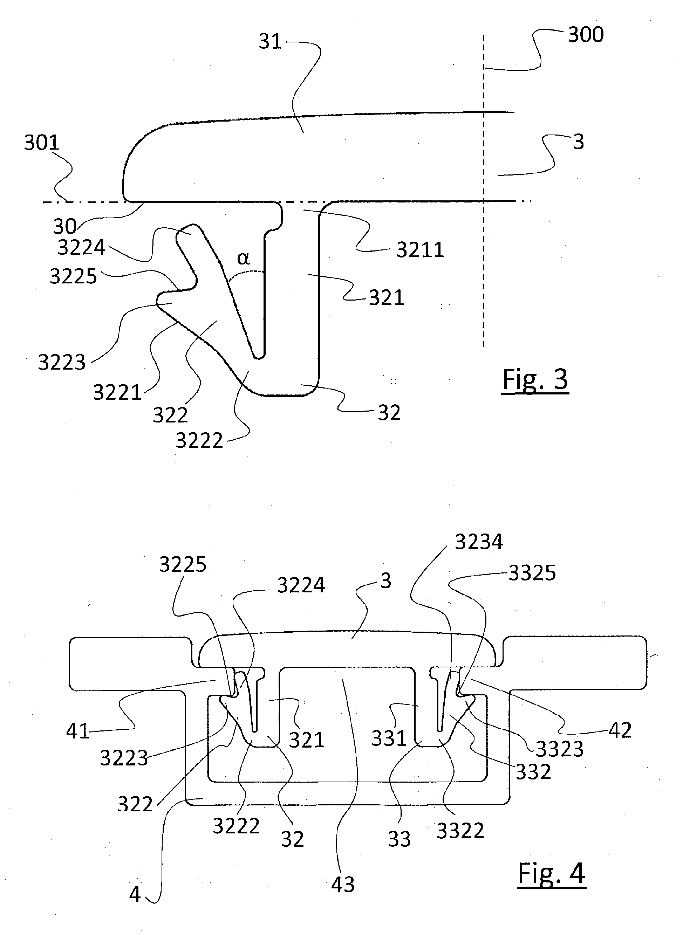

La patte 32, qui est représentée plus en détail par la figure 3, est formée de deux segments. Un premier segment 321 s'étend à partir de la face inférieure de la portion supérieure 31 et s'étend dans une direction sensiblement perpendiculaire à la surface d'appui 30.

Ce premier segment est lié, par une première de ses extrémités, à la portion supérieure 31. Cette liaison est faite, dans le mode de réalisation représenté, par l'intermédiaire d'une première zone 3211 de charnière. On considère comme une zone de charnière, dans la présente demande, une zone présentant une rigidité plus faible que les zones qui l'entourent. Cette rigidité plus faible peut provenir, comme dans le cas de la zone de charnière 3211, d'une section plus étroite qui rend la zone plus capable de se déformer élastiquement. Elle peut également provenir, dans d'autres modes de réalisation, de l'utilisation d'un matériau présentant une plus grande souplesse que le matériau constituant les zones voisines, ou de tout autre procédé connu pour faciliter la déformation d'une zone. La première zone de charnière 3211 permet au premier segment 321 de pivoter élastiquement, par rapport à la portion supérieure 31 du profilé 3, autour d'un axe parallèle à la surface d'appui 30 et au plan médian 300.

Un second segment 322 de la patte 32 est lié à la seconde extrémité du premier segment 321. Depuis cette seconde extrémité du premier segment 321, ce second segment 322 s'étend dans une direction se rapprochant de la surface d'appui 30 et s'éloignant du plan médian 300. Dans la suite de la présente description, on appellera surface externe 3221, ou surface opposée au premier segment 321, la surface du second segment 322 qui ne fait pas face au premier segment qui le porte. Quand le profilé 3 ne subit aucune déformation, comme le représente la figure 2, ce second segment 322 présente une surface externe 3221, dont une plage forme un angle compris entre 20° et 70° avec la surface d'appui 30 et un angle compris entre 20° et 70° avec le plan médian 300.

La première extrémité du second segment 322 est liée au premier segment 321 par l'intermédiaire d'une seconde zone de charnière 3222, permettant à au moins une partie du second segment 322 de pivoter, par rapport au premier segment 321, autour d'un axe parallèle au plan d'appui 301 et au plan médian 300. De façon avantageuse, la patte 32 est conformée de telle façon que cette seconde zone de charnière 3222 permette au second segment 322 de pivoter en se rapprochant du premier segment 321, depuis sa position de repos, d'un angle de débattement α compris entre 5° et 90°, et de préférence compris entre 20° et 45°, avant de rentrer en contact avec le premier segment 321.

La seconde extrémité, libre, du second segment 322 est formée par deux doigts 3224 et 3223 s'étendant dans deux directions différentes. Le doigt longitudinal 3224 s'étend dans le prolongement du second segment 322, alors que le doigt latéral 3223 s'étend latéralement sur la surface externe 3221 du second segment 322. Ces deux doigts forment, ensemble, une surface d'appui, ou plage concave 3225, apte à accueillir une arête sensiblement perpendiculaire en prenant appui simultanément sur les deux surfaces formant cette arête.

Cette plage concave 3225 peut ainsi comprendre deux surfaces planes formant un angle droit. De façon avantageuse cependant, elle présente des surfaces formant entre elles un angle aigu, de façon à pouvoir pendre appui simultanément sur les deux surfaces d'une arête sensiblement perpendiculaire, dans plusieurs positions angulaires de cette arête par rapport à la plage concave.

Ainsi, avantageusement, cette plage d'appui 3225 comporte une surface, définie par le doigt 3224, qui est inclinée d'un angle compris entre 70 et 110° par rapport au plan d'appui 301, quand le premier segment 321 est dans sa position de repos et le second segment 322 est pivoté, autour de la seconde zone de charnière 3222, jusqu'à rentrer en contact avec le premier segment 321. Il est également possible, avantageusement, que cette plage d'appui 3225 comporte une autre surface, définie par le doigt 3223, qui est inclinée de moins de 20° par rapport au plan d'appui 301, quand le profilé 3 est au repos.

### Description de la mise en place dans la rainure

La figure 2 montre, en plus du profilé souple 3, la section d'un profilé métallique 4 dans lequel peut être inséré le profilé souple 3. Ce profilé métallique 4 présente une section « en oméga » dans laquelle une rainure 43 est définie entre les portions de parois 41 et 42. Par ailleurs, ces portions de parois 41 et 42 définissent également, ensemble, une surface supérieure 44 et une surface inférieure 45.

La figure 4 représente le profilé souple 3 mis en place dans le profilé métallique 4. Lors de sa mise en place dans le profilé métallique 4, les portions de parois 41 et 42 formant les bords de la rainure 43 appuient sur les surfaces externes des seconds segments 322 et 332 des pattes 32 et 33, ce qui a pour effet de faire pivoter élastiquement ces seconds segments 322 et 332 vers les premiers segments 321 et 331 qui les portent. Par ailleurs, cet appui peut également entraîner le pivotement élastique, par rapport à la portion supérieure 31, des premiers segments 321 et 331 qui tendent à se rapprocher l'un vers l'autre.

Quand le profilé souple 3 est suffisamment inséré dans la rainure 43, les doigts latéraux 3223 et 3323 des seconds segments 322 et 332 des pattes 32 et 33 passent en dessous des portions de parois 41 et 42. Les seconds segments 322 et 332 des pattes 31 et 32 peuvent alors, sous l'effet de la force de rappel élastique de leurs zones de charnières 3222 et 3322, pivoter en s'éloignant des premiers segments 321 et 331 qui les portent jusqu'à ce que leurs doigts longitudinaux 3224 et 3324 entrent en contact avec les portions de parois 41 et 42 formant les bords latéraux de la rainure 43.

À ce moment, comme le représente la figure 4, les plages concaves 3225 et 3325 des seconds segments 322 et 332 des pattes 32 et 33 peuvent entrer en appui simultanément avec les deux arêtes perpendiculaires des portions de paroi 41 et 42. Même si, dans le mode de réalisation représenté par la figure 4, les plages concaves 3225 et 3325 sont effectivement en appui sur les deux arêtes perpendiculaires des portions de paroi 41 et 42, il n'est pas nécessaire que cet appui ait lieu pour que le profilé souple 3 soit correctement mis en place dans la rainure 43. Il est ainsi possible qu'un jeu apparaisse entre les doigts latéraux 3223 et 3323 et la surface inférieure 45 sans que cela n'entraîne d'inconvénient. En effet, si une traction est effectuée sur la portion supérieure 31 du profilé souple 3, les doigts latéraux 3223 et 3323 entreront en contact avec la surface inférieure 45 et empêcheront le retrait du joint.

Le passage des doigts latéraux 3223 et 3323 sous les portions de parois 41 et 42 entraîne un contact soudain des doigts longitudinaux 3224 et 3324 avec les portions de parois 41 et 42, ce qui cause un léger bruit du type « clic », qui peut avantageusement signaler à l'opérateur posant le joint que celui-ci est correctement mis en place.

Comme le montre la figure 4, les contacts entre les plages concaves 3225 et 3325 et les portions de parois 41 et 42 permettent d'assurer un bon maintien du profil souple 3 dans la rainure 43. Ce contact est lui-même garanti par le fait que les seconds segments 322 et 332 des pattes 32 et 33, après avoir pivoté vers les premiers segments 321 et 331 pour pénétrer dans la rainure 43, tendent, sous la force de rappel élastique, à revenir vers leur position de repos. Les portions de parois 41 et 42 les empêchent cependant d'atteindre cette position de repos et maintiennent les pattes 32 et 33 dans des positions contraintes élastiquement. Il est à noter que l'appui réalisé par les doigts longitudinaux 3224 et 3324 sur les portions de parois 41 et 42, sous l'effet de cette contrainte élastique, permettent d'obtenir efficacement un bon centrage du profilé souple 3 sur la rainure 43.

Ce contact entre les plages concaves 3225 et 3325 et les portions de parois 41 et 42 peut être obtenu pour une grande variété de largeur de rainures 43. En effet, le profilé souple 3 peut être mis en place efficacement dans des rainures dont la largeur est :
- supérieure à la distance entre les plages d'appui 3225 et 3325, au niveau des doigts longitudinaux 3224 et 3324, quand les seconds segments des pattes 32 et 33 sont pivotés contre les premiers segments, et
- inférieure à cette distance entre les plages d'appui 3225 et 3325, au niveau des doigts longitudinaux 3224 et 3324, dans la position de repos des pattes 32 et 33.
Cette grande tolérance de largeur de rainures est très supérieure à la tolérance acceptable pour les profilés souples de l'art antérieur.

Enfin, la mobilité du second segment de chacune des pattes 32 et 33, par rapport au premier segment, ainsi que la mobilité de ces pattes par rapport à la portion supérieure 31 du profilé souple 3, permet également aux pattes 32 et 33 de maintenir efficacement le profilé souple 3 dans une rainure formée dans une paroi dont l'épaisseur présente des variations plus grandes que ce qui est permis pour les profilés souples de l'art antérieur. Cette mobilité permet également que la mise en place du profilé souple dans une rainure se fasse facilement, sans rencontrer de résistance excessive. Il est ainsi à noter que, grâce à la mobilité permise par les charnières souples, il est possible de réaliser un profilé souple selon l'invention en utilisant des matériaux habituellement considérés comme trop rigide, comme par exemple l'aluminium.

### Autres modes de réalisation

La présente invention peut être mise en oeuvre sur des profilés souples différents de celui représenté par les figures 2 à 4.

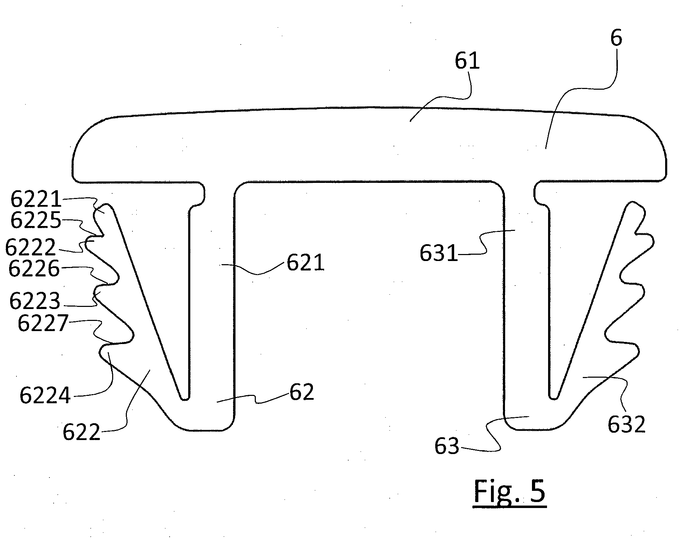

L'homme du métier pourra facilement imaginer de nombreuses variantes de la présente invention. Par exemple, la figure 5 représente une variante possible, dans laquelle un profilé souple 6 comprend une portion supérieure 61 et une portion inférieure constituée de deux pattes 62 et 63. Chacune de ces pattes 62 et 63 comprend un premier segment, respectivement 621 et 631, qui porte lui-même un second segment, respectivement 622 et 632. Avantageusement, les premiers segments 621 et 622 peuvent présenter des caractéristiques semblables ou analogues à celles des premiers segments 321 et 331, et les seconds segments 623 et 624 peuvent pivoter, par rapport aux premiers segments 621 et 622, de façon semblable ou analogue aux seconds segments 322 et 332 par rapport aux premiers segments 321 et 331.

Le second segment 622 présente cependant une forme différente du second segment 322. En effet, il présente un doigt longitudinal 6221, qui s'étend dans le prolongement du second segment 622, et trois doigts latéraux 6222, 6223 et 6224, répartis sur la surface externe du second segment 622. Ces doigts forment, avec les doigts qui leurs sont voisins, trois surfaces d'appui, ou plages concaves 6225, 6226 et 6227, chacune étant apte à accueillir une arête sensiblement perpendiculaire en prenant appui simultanément sur les deux surfaces formant cette arête. Le second segment 632 présente une forme symétrique à celle du second segment 622.

Le profilé souple 6 présente au moins une partie des avantages exposés précédemment en relation avec le profilé souple 3. Il présente en plus l'avantage de pouvoir s'adapter à des rainures ménagées dans des parois présentant une très grande variété d'épaisseur. En effet, en fonction de l'épaisseur de la paroi, l'une des plages concaves 6225, 6226 et 6227 pourra entrer en contact avec le bord de la rainure, et ainsi assurer le maintien efficace du profilé souple 6.

## Revendications

1. Profilé souple (3), comportant :
- une portion supérieure (31) présentant une surface d'appui (30) définissant un plan d'appui (301), la portion supérieure (31) s'étendant d'un premier côté dudit plan d'appui (301),
- une portion inférieure s'étendant du second côté dudit plan d'appui, et comportant deux pattes de fixation (32),
chacune desdites pattes de fixation (32, 33) comportant un premier segment (321, 331) s'étendant à partir de ladite portion supérieure (31), dans une direction s'éloignant dudit plan d'appui (301),
**caractérisé en ce que** chacune desdites pattes de fixation (32, 33) comporte un second segment (322, 332) lié audit premier segment (321, 331) par l'intermédiaire d'une zone de charnière (3222, 3322) située à distance dudit plan d'appui (301), et s'étendant, depuis cette zone de charnière (3222, 3322), dans une direction se rapprochant dudit plan d'appui (301), du côté dudit premier segment (321, 331) opposé à l'autre patte de fixation (32, 33),
et **en ce que** la surface de chacun desdits seconds segments (322, 332) qui est opposée au premier segment (321, 331) qui le porte présente au moins une plage concave (3225, 3325) conformée pour entrer en contact, simultanément, avec deux faces formant une arête à angle droit.

2. Profilé souple (3) selon la revendication précédente, **caractérisé en ce qu'**au moins une desdites pattes de fixation (32) est conformée pour permettre audit second segment (322) de pivoter, autour de ladite zone de charnière (3222), d'un angle de débattement compris entre 5° et 90°, et de préférence compris entre 20° et 45°, entre la position dudit second segment (322) quand ledit profilé souple (3) n'est pas contraint mécaniquement et la position dudit second segment (322) quand il est en contact avec le premier segment (321) qui le porte.

3. Profilé souple (3) selon l'une quelconque des revendications précédentes, **caractérisé en ce que**, sur au moins l'une desdites pattes de fixation, la surface externe (3221) dudit second segment (322), qui est opposée audit premier segment (321), présente, entre ladite zone de charnière (3222) et ladite plage concave (3225), au moins une plage formant, quand ledit profilé souple (3) n'est pas contraint mécaniquement, une inclinaison comprise entre 20° et 70° avec ledit plan d'appui (301).

4. Profilé souple selon l'une quelconque des revendications précédentes, **caractérisé en ce que**, sur au moins l'une desdites pattes de fixation, ledit premier segment (321) est lié à ladite portion supérieure (31) par l'intermédiaire d'une zone de charnière (3211).

5. Profilé souple (6) selon l'une quelconque des revendications précédentes, **caractérisé en ce que**, sur au moins l'une desdites pattes de fixation, la surface dudit second segment (622) qui est opposée audit premier segment (621) comporte, successivement, au moins deux plages concaves (6227, 6226) conformées chacune pour entrer en contact, simultanément, avec deux faces formant une arête à angle droit.

## Patentansprüche

1. Flexibles Profil (3), umfassend:
- einen oberen Abschnitt (31), der eine Auflageoberfläche (30) aufweist, die eine Auflageebene (301) definiert, wobei sich der obere Abschnitt (31) auf einer ersten Seite der Auflageebene (301) erstreckt,
- einen unteren Abschnitt, der sich auf der zweiten Seite der Auflageebene erstreckt, und umfassend zwei Befestigungslaschen (32),
wobei jede der Befestigungslaschen (32, 33) ein erstes Segment (321, 331) umfasst, das sich von dem oberen Abschnitt (31) in einer Richtung weg von der Auflageebene (301) erstreckt,
**dadurch gekennzeichnet, dass** jede der Befestigungslaschen (32, 33) ein zweites Segment (322, 332) umfasst, das mit dem ersten Segment (321, 331) über ein Scharniergebiet (3222, 3322) verbunden ist, das von der Auflageebene (301) beabstandet ist und sich von diesem Scharniergebiet (3222, 3322) in einer Richtung auf die Auflageebene (301) zu auf der Seite des ersten Segments (321, 331) erstreckt, die der anderen Befestigungslasche (32, 33) gegenüberliegt,
und dass die Oberfläche jedes der zweiten Segmente (322, 332), die dem ersten Segment (321, 331), das sie trägt, gegenüberliegt, mindestens einen konkaven Bereich (3225, 3325) aufweist, der beschaffen ist, um gleichzeitig mit zwei Flächen in Kontakt zu kommen, die eine Kante in einem rechten Winkel bilden.

2. Flexibles Profil (3) nach dem vorstehenden Anspruch,
**dadurch gekennzeichnet, dass** mindestens eine der Befestigungslaschen (32) so beschaffen ist, dass es dem zweiten Segment (322) ermöglicht ist, um das Scharniergebiet (3222) herum um einen Beugungswinkel zwischen 5° und 90° und vorzugsweise zwischen 20° und 45° zwischen der Position des zweiten Segments (322), wenn das flexible Profil (3) nicht mechanisch eingeschränkt ist, und der Position des zweiten Segments (322), wenn es in Kontakt mit dem ersten Segment (321) ist, das es trägt, zu schwenken.

3. Flexibles Profil (3) nach einem der vorstehenden Ansprüche,
**dadurch gekennzeichnet, dass** an mindestens einer der Befestigungslaschen die Außenoberfläche (3221) des zweiten Segments (322), die dem ersten Segment (321) gegenüberliegt, zwischen dem Scharniergebiet (3222) und dem konkaven Bereich (3225) mindestens einen Bereich aufweist, der, wenn das flexible Profil (3) nicht mechanisch eingeschränkt ist, eine Neigung zwischen 20° und 70° mit der Auflageebene (301) bildet.

4. Flexibles Profil nach einem der vorstehenden Ansprüche,
**dadurch gekennzeichnet, dass** an mindestens einer der Befestigungslaschen das erste Segment (321) über ein Scharniergebiet (3211) mit dem oberen Abschnitt (31) verbunden ist.

5. Flexibles Profil (6) nach einem der vorstehenden Ansprüche,
**dadurch gekennzeichnet, dass** an mindestens einer der Befestigungslaschen die Oberfläche des zweiten Segments (622), die dem ersten Segment (621) gegenüberliegt, nacheinander mindestens zwei konkave Bereiche (6227, 6226) umfasst, die jeweils beschaffen sind, um gleichzeitig mit zwei Flächen in Kontakt zu kommen, die eine rechtwinklige Kante bilden.

## Claims

1. Flexible profile (3), comprising:
- an upper portion (31) having a bearing surface (30) which defines a bearing plane (301), the upper portion (31) extending from a first side of said bearing plane (301),
- a lower portion extending from the second side of said bearing plane, and comprising two fastening tabs (32),
each of said fastening tabs (32, 33) comprising a first segment (321, 331) extending from said upper portion (31) in a direction moving away from said bearing plane (301),
**characterized in that** each of said fastening tabs (32, 33) comprises a second segment (322, 332) connected to said first segment (321, 331) via a hinge zone (3222, 3322) located at a distance from said bearing plane (301), and extending, from this hinge zone (3222, 3322), in a direction moving closer to said bearing plane (301) on the side of said first segment (321, 331) opposite the other fastening tab (32, 33),
and **in that** the surface of each of said second segments (322, 332) which is opposite the first segment (321, 331) that supports it has at least one concave area (3225, 3325) which is shaped to simultaneously come into contact with two faces forming a right-angled edge.

2. Flexible profile (3) according to the preceding claim, **characterized in that** at least one of said fastening tabs (32) is shaped to allow said second segment (322) to swivel around said hinge zone (3222), at a displacement angle of between 5° and 90°, and preferably between 20° and 45°, between the position of said second segment (322) when said flexible profile (3) is not mechanically stressed and the position of said second segment (322) when it is in contact with the first segment (321) that supports it.

3. Flexible profile (3) according to either of the preceding claims,
**characterized in that,** on at least one of said fastening tabs, the external surface (3221) of said second segment (322), which is opposite said first segment (321), has, between said hinge zone (3222) and said concave area (3225), at least one area which forms, when said flexible profile (3) is not mechanically stressed, an inclination of between 20° and 70° with said bearing plane (301).

4. Flexible profile according to any of the preceding claims,
**characterized in that,** on at least one of said fastening tabs, said first segment (321) is connected to said upper portion (31) via a hinge zone (3211).

5. Flexible profile (6) according to any of the preceding claims,
**characterized in that,** on at least one of said fastening tabs, the surface of said second segment (622) which is opposite said first segment (621) successively comprises at least two concave areas (6227, 6226), each of which is shaped to simultaneously come into contact with two faces forming a right-angled edge.
